# EUROPEAN PATENT SPECIFICATION

(11) **EP 3 608 181 B1**
(45) Date of publication and mention of the grant of the patent: **11.05.2022**
(21) Application number: 18717692.0
(22) Date of filing: 13.03.2018
(51) Int. Cl.: B60T 8/17, B60T 8/1755

(54) **CONTROL DEVICE, CONTROL METHOD, AND BRAKE SYSTEM**
STEUERUNGSVORRICHTUNG, STEUERUNGSVERFAHREN UND BREMSSYSTEM
DISPOSITIF DE COMMANDE, PROCÉDÉ DE COMMANDE, ET SYSTÈME DE FREINAGE

(30) Priority: 06.04.2017 JP 2017075773
(43) Date of publication of application: 12.02.2020
(73) Proprietor: Robert Bosch GmbH, 70442 Stuttgart (DE)
(72) Inventor: OSHIDA, Yuki, Yokohama-shi Kanagawa 224-8501 (JP)
(86) International application number: PCT/IB2018/051640
(87) International publication number: WO 2018/185577

(56) References cited:
- EP-A2- 3 124 370
- DE-A1- 10 118 707
- DE-A1-102013 200 044
- DE-A1-102015 104 547

## Description

### Technical Field

The present invention relates to a controller and a control method capable of improving safety by an automatic emergency deceleration operation while preventing a motorcycle from falling over, and to a brake system that includes such a controller.

### Background Art

As a conventional technique related to a motorcycle, a technique of improving driver safety has been available.

For example, a driver assistance system is disclosed in PTL 1. Based on information detected by a sensor that detects presence of an obstacle in a travel direction or substantially in the travel direction, the driver assistance system warns a driver of the motorcycle that the motorcycle inappropriately approaches the obstacle.

### Citation List

### Patent Literature

[PTL 1] JP-A-2009-116882

### Summary of Invention

### Technical Problem

By the way, in order to further improve the driver safety, it is considered to use a technique of avoiding a collision with a forward obstacle by making the motorcycle execute an automatic emergency deceleration operation that is an operation to cause the motorcycle to stop at a position behind the forward obstacle without relying on the driver ' s operation . Here, the motorcycle tends to have unstable posture when compared to a four-wheeled vehicle, for example. This leads to such a problem that the motorcycle possibly falls over due to deceleration of the motorcycle generated by the automatic emergency deceleration operation. Some examples of automatic emergency deceleration for motorcycles are described in EP 3 124 370 A2 and DE 10 2013 200044 A1.

The invention has been made with the above-described problem as the background and therefore obtains a controller and a control method capable of improving safety by an automatic emergency deceleration operation while preventing a motorcycle from falling over. The invention also obtains a brake system that includes such a controller.

### Solution to Problem

A controller according to the invention is a controller that controls behavior of a motorcycle, and includes: an acquisition section that acquires trigger information generated in accordance with peripheral environment of the motorcycle; and an execution section that initiates a control mode in response to the trigger information, the control mode making the motorcycle execute an automatic emergency deceleration operation. In the control mode, before the automatic emergency deceleration operation is executed, first notification and second notification to notify a driver of execution of the automatic emergency deceleration operation are sequentially initiated. In the first notification, the driver is notified of the execution of the automatic emergency deceleration operation without being applied with an external force. In the second notification, the driver is notified of the execution of the automatic emergency deceleration operation by being applied with the external force, wherein the automatic emergency deceleration operation is initiated after termination of the second notification, and the external force is an inertial force that acts on the driver when deceleration is generated in the motorcycle, wherein in the second notification, the deceleration is generated by controlling a braking force that is applied to a wheel of the motorcycle.

A control method according to the invention is a control method of controlling behavior of a motorcycle, and includes: an acquisition step of acquiring trigger information that is generated in accordance with peripheral environment of the motorcycle; and an execution step of initiating a control mode in response to the trigger information, the control mode making the motorcycle execute an automatic emergency deceleration operation. In the control mode, before the automatic emergency deceleration operation is executed, first notification and second notification to notify a driver of execution of the automatic emergency deceleration operation are sequentially initiated. In the first notification, the driver is notified of the execution of the automatic emergency deceleration operation without being applied with an external force. In the second notification, the driver is notified of the execution of the automatic emergency deceleration operation by being applied with the external force, wherein the automatic emergency deceleration operation is initiated after termination of the second notification, and the external force is an inertial force that acts on the driver when deceleration is generated in the motorcycle, and wherein in the second notification, the deceleration is generated by controlling a braking force that is applied to a wheel of the motorcycle.

A brake system according to a further aspect of the invention is a brake system that includes: a peripheral environment sensor that detects peripheral environment of a motorcycle; and a controller according to the invention j that controls behavior of the motorcycle on the basis of the peripheral environment.

### Advantageous Effects of Invention

In the controller, the control method, and the brake system according to the invention, the control mode that makes the motorcycle execute the automatic emergency deceleration operation is initiated in response to the trigger information that is generated in accordance with the peripheral environment of the motorcycle. In the control mode, before the automatic emergency deceleration operation is executed, the first notification and the second notification to notify the driver of the execution of the automatic emergency deceleration operation are sequentially initiated. In the first notification, the driver is notified of the execution of the automatic emergency deceleration operation without being applied with the external force. In the second notification, the driver is notified of the execution of the automatic emergency deceleration operation by being applied with the external force. In this way, it is possible to effectively promote execution of an avoidance operation by the driver's operation before the automatic emergency deceleration operation is executed. The avoidance operation is an operation to avoid a collision with a forward obstacle. Thus, the collision with the forward obstacle can be avoided while an execution frequency of the automatic emergency deceleration operation is reduced. Therefore, safety can be improved by the automatic emergency deceleration operation while falling of the motorcycle is prevented.

### Brief Description of Drawings

Fig. 1 is a schematic view of an exemplary configuration of a motorcycle on which a brake system according to an embodiment of the invention is mounted.
Fig. 2 is a schematic view of an exemplary configuration of the brake system according to the embodiment of the invention.
Fig. 3 is a block diagram of an exemplary functional configuration of a controller according to the embodiment of the invention.
Fig. 4 is a view illustrating a lean angle.
Fig. 5 is a flowchart of an example of a processing procedure that is executed by the controller according to the embodiment of the invention.

### Description of Embodiment

A description will hereinafter be made on a controller, a control method, and a brake system according to the invention by using the drawings. Note that a description will hereinafter be made on a case where a motorcycle is a two-wheeled motor vehicle; however, the motorcycle may be another motorcycle such as a three-wheeled motor vehicle. In addition, a description will be made on a case where each of a front-wheel brake mechanism and a rear-wheel brake mechanism is provided in one unit; however, at least one of the front-wheel brake mechanism and the rear-wheel brake mechanism may be provided in multiple units.

A configuration, an operation, and the like, which will be described below, constitute merely one example, and the controller, the control method, and the brake system according to the invention are not limited to a case with such a configuration, such an operation, and the like.

The same or similar description will appropriately be simplified or will not be made below. In the drawings, the same or similar members or portions will not be denoted by a reference sign or will be denoted by the same reference sign. In addition, a detailed structure will appropriately be depicted in a simplified manner or will not be depicted.

### <Configuration of Brake System>

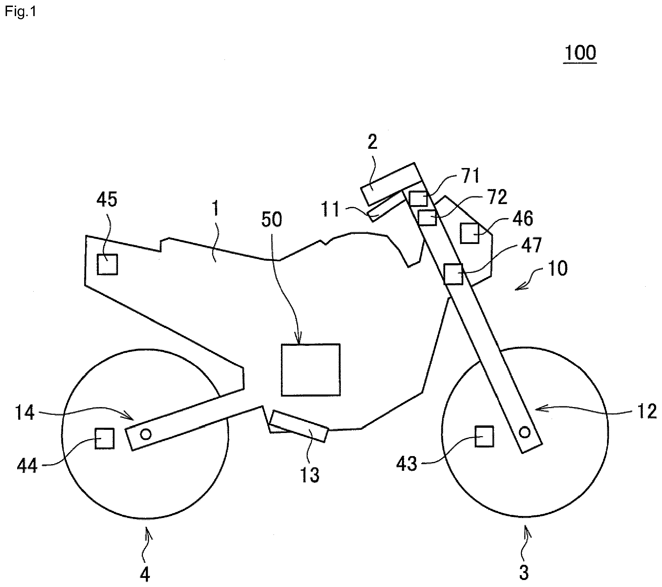

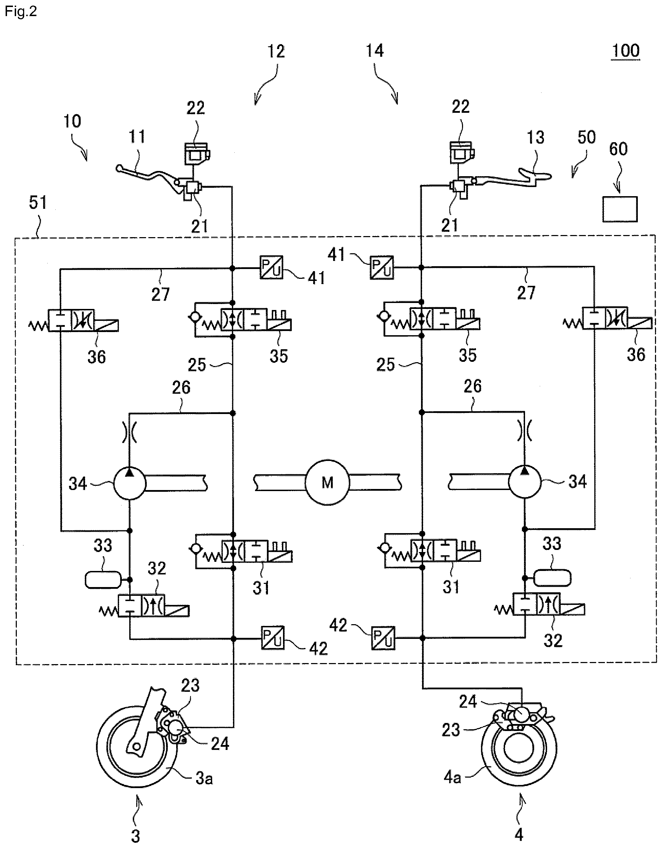

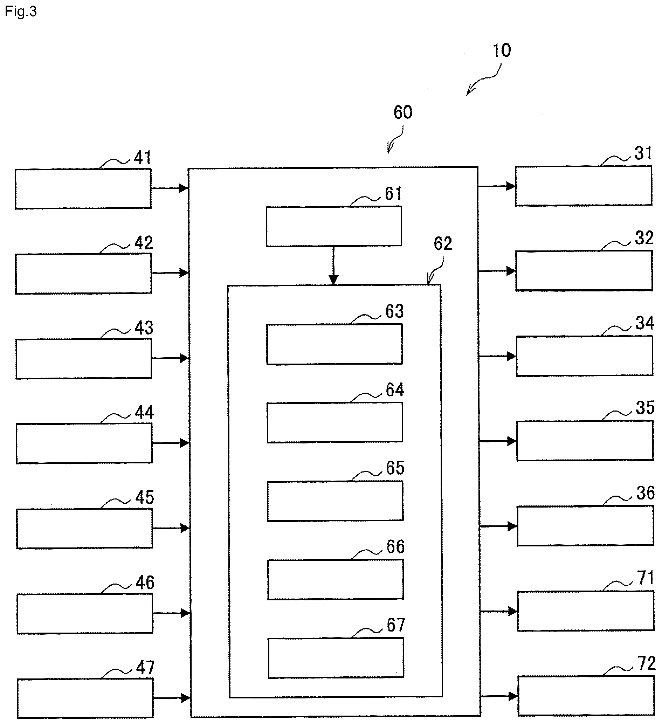

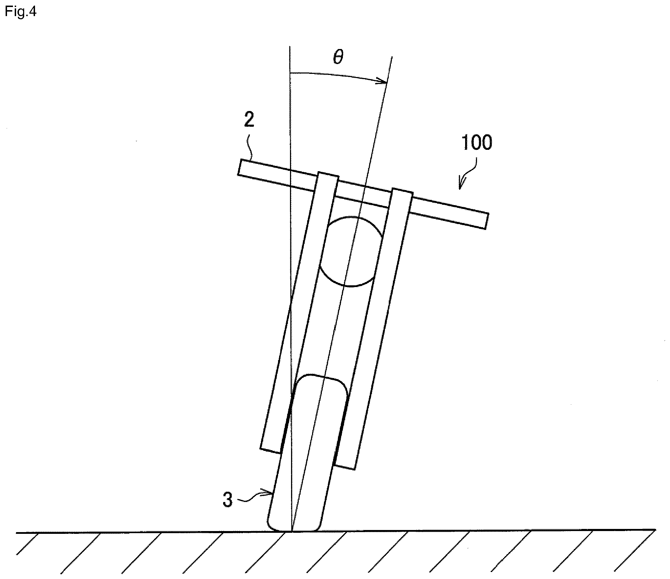

A description will be made on a configuration of a brake system 10 according to an embodiment of the invention. Fig. 1 is a schematic view of an exemplary configuration of a motorcycle 100 on which a brake system 10 according to the embodiment of the invention is mounted. Fig. 2 is a schematic view of an exemplary configuration of the brake system 10 according to the embodiment of the invention. Fig. 3 is a block diagram of an exemplary functional configuration of a controller 60 according to the embodiment of the invention. Fig. 4 is a view illustrating a lean angle.

As depicted in Fig. 1 and Fig. 2, the brake system 10 is mounted on the motorcycle 100. The motorcycle 100 includes : a trunk 1; a handlebar 2 that is held by the trunk 1 in a freely turnable manner; a front wheel 3 that is held by the trunk 1 in the freely turnable manner with the handlebar 2; and a rear wheel 4 that is held by the trunk 1 in a freely rotatable manner.

For example, the brake system 10 includes: a first brake operation section 11; a front-wheel brake mechanism 12 that brakes the front wheel 3 in an interlocking manner with at least the first brake operation section 11; a second brake operation section 13; and a rear-wheel brake mechanism 14 that brakes the rear wheel 4 in the interlocking manner with at least the second brake operation section 13.

The first brake operation section 11 is provided on the handlebar 2 and is operated by a driver's hand. The first brake operation section 11 is a brake lever, for example. The second brake operation section 13 is provided in a lower portion of the trunk 1 and is operated by the driver's foot. The second brake operation section 13 is a brake pedal, for example.

Each of the front-wheel brake mechanism 12 and the rear-wheel brake mechanism 14 includes: a master cylinder 21 in which a piston (not depicted) is installed; a reservoir 22 that is attached to the master cylinder 21; a brake caliper 23 that is held by the trunk 1 and has a brake pad (not depicted) ; a wheel cylinder 24 that is provided in the brake caliper 23; a primary channel 25 through which brake fluid in the master cylinder 21 is delivered to the wheel cylinder 24; a secondary channel 26 through which the brake fluid in the wheel cylinder 24 is released; and a supply channel 27 through which the brake fluid in the master cylinder 21 is supplied to the secondary channel 26.

An inlet valve (EV) 31 is provided in the primary channel 25. The secondary channel 26 bypasses a portion of the primary channel 25 between the wheel cylinder 24 side and the master cylinder 21 side from the inlet valve 31. The secondary channel 26 is sequentially provided with an outlet valve (AV) 32, an accumulator 33, and a pump 34 from an upstream side. A first valve (USV) 35 is provided in a portion of the primary channel 25 that is between an end of the primary channel 25 on the master cylinder 21 side and a portion of the primary channel 25 to which a downstream end of the secondary channel 26 is connected. The supply channel 27 communicates between the master cylinder 21 and a suction side of the pump 34 in the secondary channel 26. A second valve (HSV) 36 is provided in the supply channel 27.

The inlet valve 31 is an electromagnetic valve that is opened in an unenergized state and closed in an energized state, for example. The outlet valve 32 is an electromagnetic valve that is closed in the unenergized state and opened in the energized state, for example. The first valve 35 is an electromagnetic valve that is opened in the unenergized state and is closed in the energized state, for example. The second valve 36 is an electromagnetic valve that is closed in the unenergized state and is opened in the energized state, for example.

A hydraulic pressure control unit 50 is configured by including: members such as the inlet valves 31, the outlet valves 32, the accumulators 33, the pumps 34, the first valves 35, and the second valves 36; a base body 51 that is provided with those members and is formed with channels constituting the primary channels 25, the secondary channels 26, and the supply channels 27 therein; and the controller (ECU) 60. In the brake system 10, the hydraulic pressure control unit 50 is a unit that has a function of controlling a hydraulic pressure of the brake fluid in each of the wheel cylinders 24, that is, a braking force to be applied to the front wheel 3 by the front-wheel brake mechanism 12 and a braking force to be applied to the rear wheel 4 by the rear-wheel brake mechanism 14.

The members may collectively be provided in the single base body 51 or may separately be provided in the multiple base bodies 51. In addition, the controller 60 may be provided as one unit or may be divided into multiple units. Furthermore, the controller 60 may be attached to the base body 51 or may be attached to a member other than the base body 51. Moreover, the controller 60 may partially or entirely be constructed of a microcomputer, a microprocessor unit, or the like, may be constructed of a member in which firmware and the like can be updated, or may be a program module or the like that is executed by a command from a CPU or the like, for example.

In a normal state, that is, in a state where an automatic emergency deceleration operation, which will be described below, is not executed, the controller 60 opens the inlet valves 31, closes the outlet valves 32, opens the first valves 35, and closes the second valves 36. When the first brake operation section 11 is operated in such a state, in the front-wheel brake mechanism 12, the piston (not depicted) in the master cylinder 21 is pressed to increase the hydraulic pressure of the brake fluid in the wheel cylinder 24, the brake pad (not depicted) of the brake caliper 23 is then pressed against a rotor 3a of the front wheel 3, and the braking force is thereby applied to the front wheel 3. Meanwhile, when the second brake operation section 13 is operated, in the rear-wheel brake mechanism 14, the piston (not depicted) in the master cylinder 21 is pressed to increase the hydraulic pressure of the brake fluid in the wheel cylinder 24, the brake pad (not depicted) of the brake caliper 23 is then pressed against a rotor 4a of the rear wheel 4, and the braking force is thereby applied to the rear wheel 4.

As depicted in Fig. 2 and Fig. 3, the brake system 10 includes master-cylinder pressure sensors 41, wheel-cylinder pressure sensors 42, a front-wheel rotational frequency sensor 43, a rear-wheel rotational frequency sensor 44, a lean angle sensor 45, a peripheral environment sensor 46, a steering angle sensor 47, a display device 71, and a sound output device 72, for example. Each of the sensors, the display device 71, and the sound output device 72 is communicable with the controller 60.

Each of the master-cylinder pressure sensors 41 detects a hydraulic pressure of the brake fluid in the master cylinder 21 and outputs a detection result. Each of the master-cylinder pressure sensors 41 may detect another physical quantity that can substantially be converted to the hydraulic pressure of the brake fluid in the master cylinder 21. The master-cylinder pressure sensor 41 is provided in each of the front-wheel brake mechanism 12 and the rear-wheel brake mechanism 14.

Each of the wheel-cylinder pressure sensors 42 detects the hydraulic pressure of the brake fluid in the wheel cylinder 24 and outputs a detection result. Each of the wheel-cylinder pressure sensors 42 may detect another physical quantity that can substantially be converted to the hydraulic pressure of the brake fluid in the wheel cylinder 24. The wheel-cylinder pressure sensor 42 is provided in each of the front-wheel brake mechanism 12 and the rear-wheel brake mechanism 14.

The front-wheel rotational frequency sensor 43 detects a rotational frequency of the front wheel 3 and outputs a detection result. The front-wheel rotational frequency sensor 43 may detect another physical quantity that can substantially be converted to the rotational frequency of the front wheel 3. The rear-wheel rotational frequency sensor 44 detects a rotational frequency of the rear wheel 4 and outputs a detection result. The rear-wheel rotational frequency sensor 44 may detect another physical quantity that can substantially be converted to the rotational frequency of the rear wheel 4. The front-wheel rotational frequency sensor 43 and the rear-wheel rotational frequency sensor 44 are respectively provided on the front wheel 3 and the rear wheel 4.

The lean angle sensor 45 detects a lean angle of the motorcycle 100 and an angular velocity of the lean angle thereof, and outputs a detection result. For example, the lean angle corresponds to a tilt angle θ of the motorcycle 100 in a rolling direction with respect to an upper vertical direction depicted in Fig. 4. Note that the motorcycle 100 is tilted in the rolling direction with respect to the upper vertical direction during turning travel. More specifically, an inertial measurement unit (IMU) that includes a three-axis gyroscope sensor and a three-directional acceleration sensor is used as the lean angle sensor 45. The lean angle sensor 45 may detect another physical quantity that can substantially be converted to the lean angle of the motorcycle 100 and the angular velocity of the lean angle thereof. The lean angle sensor 45 is provided in the trunk 1.

The peripheral environment sensor 46 detects peripheral environment of the motorcycle 100. For example, as the peripheral environment, the peripheral environment sensor 46 detects a distance from the motorcycle 100 to a forward obstacle (for example, a preceding vehicle). The peripheral environment sensor 46 may detect another physical quantity that can substantially be converted to the distance from the motorcycle 100 to the forward obstacle. More specifically, a camera that captures an image in front of the motorcycle 100 or a distance measurement sensor that can detect the distance from the motorcycle 100 to the forward obstacle is used as the peripheral environment sensor 46. The peripheral environment sensor 46 is provided in a front portion of the trunk 1.

In addition, the peripheral environment sensor 46 generates trigger information in accordance with the peripheral environment and outputs the trigger information. The trigger information is used to determine initiation of a control mode, which will be described below. For example, the peripheral environment sensor 46 computes a body speed of the motorcycle 100 on the basis of the rotational frequencies of the front wheel 3 and the rear wheel 4, and estimates duration before arrival on the basis of the distance from the motorcycle 100 to the forward obstacle and the body speed. The duration before arrival is duration before the motorcycle 100 arrives at the forward obstacle. The peripheral environment sensor 46 generates the trigger information in the case where the duration before arrival falls below first reference duration.

Here, in the control mode, the automatic emergency deceleration operation is executed. The automatic emergency deceleration operation is the operation to cause the motorcycle 100 to stop at a position behind the forward obstacle without relying on the driver's operation. More specifically, in the control mode, as will be described below, first notification and second notification to notify the driver of the execution of the automatic emergency deceleration operation are sequentially initiated before the automatic emergency deceleration operation is executed. The first notification is initiated, for example, in the case where the duration before arrival falls below the first reference duration (for example, in the case where the trigger information is generated) . The second notification is initiated, for example, in the case where the duration before arrival falls below second reference duration. The automatic emergency deceleration operation is executed, for example, in the case where the duration before arrival falls below third reference duration.

More specifically, the third reference duration is set in accordance with estimated duration before the motorcycle 100 stops in the case where the motorcycle 100 executes the automatic emergency deceleration operation. More specifically, the second reference duration is set as longer duration than the third reference duration by such duration that an effect of promoting the driver to execute an avoidance operation can be exerted by the second notification. More specifically, the first reference duration is set as longer duration than the second reference duration by such duration that the effect of promoting the driver to execute the avoidance operation can be exerted by the first notification.

Furthermore, the peripheral environment sensor 46 computes target deceleration in conjunction with generation of the trigger information and outputs a computation result. The target deceleration is a target value of automatic emergency deceleration that is deceleration generated in the motorcycle 100 by the automatic emergency deceleration operation. The target deceleration is deceleration that allows the motorcycle 100 to stop behind the forward obstacle by the automatic emergency deceleration operation, and is computed on the basis of the distance from the motorcycle 100 to the forward obstacle and the body speed, for example.

The steering angle sensor 47 detects a steering angle of the motorcycle 100 and an angular velocity of the steering angle thereof, and outputs a detection result. The steering angle sensor 47 may detect another physical quantity that can substantially be converted to the steering angle of the motorcycle 100 and the angular velocity of the steering angle thereof. The steering angle sensor 47 is provided on the handlebar 2.

The display device 71 is a device on which information is shown visually. More specifically, a display or a lamp is used as the display device 71.

The sound output device 72 is a device that outputs information aurally as sound. More specifically, a speaker is used as the sound output device 72.

The controller 60 controls behavior of the motorcycle 100. The controller 60 includes an acquisition section 61 and an execution section 62, for example. The acquisition section 61 acquires information output from each of the sensors and outputs the acquired information to the execution section 62. The execution section 62 includes a deceleration control section 63, a notification control section 64, a trigger determination section 65, an avoidance intention determination section 66, and a duration before arrival determination section 67, for example. Each of the determination sections executes determination processing by using the information that is output from each of the sensors. In accordance with a determination result by the trigger determination section 65, the execution section 62 initiates the control mode that makes the motorcycle 100 execute the automatic emergency deceleration operation. In the control mode, the deceleration control section 63 outputs a command that governs the operations of the inlet valves 31, the outlet valves 32, the pumps 34, the first valves 35, the second valves 36, and the like in accordance with the determination result by each of the determination sections, so as to make the motorcycle 100 execute the automatic emergency deceleration operation. In the control mode, the notification control section 64 outputs a command that governs the operation of each of devices in accordance with the determination result by each of the determination sections, so as to notify the driver of the execution of the automatic emergency deceleration operation.

The controller 60 includes a storage element, and the information such as the reference values used in the processing executed by the controller 60 may be stored in the storage element in advance.

### <Operation of Brake System>

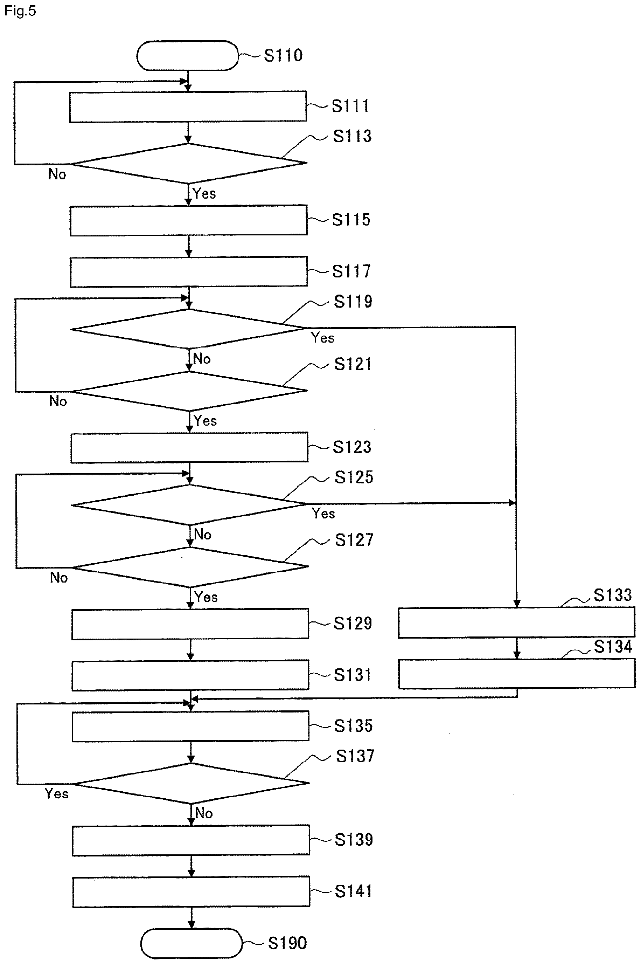

A description will be made on an operation of the brake system 10 according to the embodiment of the invention. Fig. 5 is a flowchart of an example of a processing procedure that is executed by the controller 60 according to the embodiment of the invention. A control flow depicted in Fig. 5 is repeated during activation of the brake system 10 (in other words, during an operation of the motorcycle 100) . Step S110 and step S190 in Fig. 5 respectively correspond to initiation and termination of the control flow. In step S110, the control flow is initiated in a state where the control mode is not initiated.

In step S111, the acquisition section 61 acquires the trigger information. Note that the case where the peripheral environment sensor 46 generates the trigger information has been described above; however, the controller 60 may generate the trigger information. For example, the detection result of the distance from the motorcycle 100 to the forward obstacle may be output from the peripheral environment sensor 46 to the controller 60, and the controller 60 may generate the trigger information on the basis of the distance from the motorcycle 100 to the forward obstacle and the body speed of the motorcycle 100. In this way, the acquisition section 61 can acquire the trigger information.

Next, in step S113, the trigger determination section 65 determines whether the trigger information has been acquired. If it is determined that the trigger information has been acquired (step S113/Yes) , the processing proceeds to step S115. On the other hand, if it is determined that the trigger information has not been acquired (step S113/No), the processing returns to step S111.

In step S115, the execution section 62 initiates the control mode to make the motorcycle 100 execute the automatic emergency deceleration operation.

Next, in step S117, the notification control section 64 initiates the first notification to notify the driver of the execution of the automatic emergency deceleration operation.

For example, in the first notification, the notification control section 64 makes the sound output device 72 output the sound, so as to notify the driver of the execution of the automatic emergency deceleration operation. More specifically, in the first notification, the notification control section 64 may make the sound output device 72 output voice that tells the execution of the automatic emergency deceleration operation. Alternatively, in the first notification, the notification control section 64 may make the sound output device 72 output electronic sound such as a beep, so as to notify the execution of the automatic emergency deceleration operation.

In addition, for example, in the first notification, the notification control section 64 controls what is shown by the display device 71, so as to notify the driver of the execution of the automatic emergency deceleration operation. More specifically, in the case where the display is used as the display device 71, in the first notification, the notification control section 64 may make the display device 71 show an image that indicates the execution of the automatic emergency deceleration operation. Alternatively, in the case where the lamp is used as the display device 71, in the first notification, the notification control section 64 may make the display device 71 turn on the lamp or make the lamp blink, so as to notify the execution of the automatic emergency deceleration operation.

In other words, in the first notification, the notification control section 64 notifies the driver of the execution of the automatic emergency deceleration operation by a method that does not apply an external force to the driver. Note that, in the first notification, the notification control section 64 may control both of the sound output by the sound output device 72 and what is shown by the display device 71, so as to notify the driver of the execution of the automatic emergency deceleration operation.

Next, in step S119, the avoidance intention determination section 66 determines whether the driver has an avoidance intention that is an intention to avoid the forward obstacle. If it is determined that the driver has the avoidance intention (step S119/Yes) , the processing proceeds to step S133. On the other hand, if it is determined that the driver does not have the avoidance intention (step S119/No) , the processing proceeds to step S121.

For example, in the case where a change rate of a state amount that is related to the posture of the motorcycle 100 during the turning travel exceeds a change rate reference value, the avoidance intention determination section 66 determines that the driver has the avoidance intention. The state amount that is related to the posture of the motorcycle 100 during the turning travel includes the lean angle, the angular velocity of the lean angle, the steering angle, or the angular velocity of the steering angle, for example. The change rate reference value is set to such a value that a determination on whether a possibility of the driver having the avoidance intention is high can be made.

Alternatively, for example, in the case where an operation amount that is related to the operation of the motorcycle 100 by the driver exceeds an operation amount reference value, the avoidance intention determination section 66 determines that the driver has the avoidance intention. The operation of the motorcycle 100 by the driver includes an accelerator pedal operation, a brake operation, and a clutch operation, for example. The operation amount reference value is set to such a value that a determination on whether the driver has operated the motorcycle 100 can be made.

In step S121, the duration before arrival determination section 67 determines whether the duration before the motorcycle 100 arrives at the forward obstacle falls below the second reference duration. If it is determined that the duration before arrival falls below the second reference duration (step S121/Yes) , the processing proceeds to step S123. On the other hand, if it is determined that the duration before arrival does not fall below the second reference duration (step S121/No), the processing returns to step S119.

For example, an estimation result of the duration before arrival can be output from the peripheral environment sensor 46 to the controller 60, and the controller 60 can compare the duration before arrival with the second reference duration on the basis of the acquired estimation result. Note that the controller 60 may estimate the duration before arrival. For example, the detection result of the distance from the motorcycle 100 to the forward obstacle may be output from the peripheral environment sensor 46 to the controller 60, and the controller 60 may estimate the duration before arrival on the basis of the distance from the motorcycle 100 to the forward obstacle and the body speed of the motorcycle 100.

In step S123, the notification control section 64 initiates the second notification to notify the driver of the execution of the automatic emergency deceleration operation. In the second notification, the notification control section 64 notifies the driver of the execution of the automatic emergency deceleration operation by applying the external force to the driver.

More specifically, in the second notification, the notification control section 64 applies an inertial force as the external force to the driver, and the inertial force acts on the driver when the deceleration is generated in the motorcycle 100.

For example, in the second notification, the notification control section 64 controls the braking force that is applied to the wheel of the motorcycle 100, so as to cause the generation of the deceleration in the motorcycle 100. More specifically, the notification control section 64 can drive the pump 34 in at least one of the front-wheel brake mechanism 12 and the rear-wheel brake mechanism 14 in a state where the inlet valve 31 is opened, the outlet valve 32 is closed, the first valve 35 is closed, and the second valve 36 is opened, so as to cause the generation of the braking force that is applied to the wheel. In this way, the deceleration is generated in the motorcycle 100, and the inertial force that corresponds to the deceleration thereby acts on the driver.

Alternatively, for example, in the second notification, the notification control section 64 controls the engine output of the motorcycle 100, so as to cause the generation of the deceleration in the motorcycle 100. More specifically, the notification control section 64 can cause the generation of the deceleration in the motorcycle 100 by using an operational effect of engine brake that is exerted when the engine output is lowered. When the deceleration is generated in the motorcycle 100, just as described, the inertial force that corresponds to the deceleration acts on the driver.

Further specifically, in the second notification, the notification control section 64 causes the repeated generation of the low deceleration at every set time, and the low deceleration falls within such a range that the inertial force that can be perceived by the driver can act on the driver. In this way, the driver can effectively be promoted to execute the avoidance operation while an increase in the deceleration generated in the motorcycle 100 is prevented in the second notification.

Note that, in the second notification, the notification control section 64 may control both of the braking force applied to the wheel and the engine output, so as to cause the generation of the deceleration in the motorcycle 100. In addition, in the second notification, the external force that is applied to the driver may not be the inertial force that acts on the driver when the deceleration is generated in the motorcycle 100. For example, in the case where the motorcycle 100 is provided with a vibratory device that generates vibrations, in the second notification, the notification control section 64 may drive the vibratory device, so as to apply the vibrations generated by the vibratory device as the external force to the driver.

Next, in step S125, the avoidance intention determination section 66 determines whether the driver has the avoidance intention. If it is determined that the driver has the avoidance intention (step S125/Yes), the processing proceeds to step S133. On the other hand, if it is determined that the driver does not have the avoidance intention (step S125/No), the processing proceeds to step S127.

In step S127, the duration before arrival determination section 67 determines whether the duration before arrival falls below the third reference duration. If it is determined that the duration before arrival falls below the third reference duration (step S127/Yes) , the processing proceeds to step S129. On the other hand, if it is determined that the duration before arrival does not fall below the third reference duration (step S127/No), the processing returns to step S125.

For example, the estimation result of the duration before arrival can be output from the peripheral environment sensor 46 to the controller 60, and the controller 60 can compare the duration before arrival with the third reference duration on the basis of the acquired estimation result. Note that the controller 60 may estimate the duration before arrival.

In step S129, the notification control section 64 terminates the second notification.

Next, in step S131, the deceleration control section 63 permits the automatic emergency deceleration operation. Once permitting the automatic emergency deceleration operation, the deceleration control section 63 causes the generation of the automatic emergency deceleration that is the deceleration independent of the driver ' s operation, and makes the motorcycle 100 execute the automatic emergency deceleration operation. Just as described, in the control mode, after the first notification and the second notification are sequentially initiated, the automatic emergency deceleration operation is executed. In other words, in the control mode, before the automatic emergency deceleration operation is executed, the first notification and the second notification are sequentially initiated.

For example, the deceleration control section 63 causes the generation of the automatic emergency deceleration through generation of the braking force that is applied to the wheel by at least one of the front-wheel brake mechanism 12 and the rear-wheel brake mechanism 14. More specifically, the deceleration control section 63 drives the pump 34 in the state where the inlet valve 31 is opened, the outlet valve 32 is closed, the first valve 35 is closed, and the second valve 36 is opened, so as to cause the generation of the braking force that is applied to the wheel.

The deceleration control section 63 controls a rotational frequency of the pump 34 and thereby controls the braking force that is applied to the wheel. More specifically, based on the target deceleration that is output from the peripheral environment sensor 46, the deceleration control section 63 decides a target hydraulic pressure that is a target value of the hydraulic pressure of the brake fluid in the wheel cylinder 24. Then, the deceleration control section 63 controls the rotational frequency of the pump 34 such that the hydraulic pressure of the brake fluid in the wheel cylinder 24 matches the target hydraulic pressure. In this way, the automatic emergency deceleration is controlled to match the target deceleration.

Note that the case where the deceleration control section 63 controls the automatic emergency deceleration by controlling the braking force that is applied to the wheel has been described above; however, the deceleration control section 63 may control the automatic emergency deceleration by controlling the engine output of the motorcycle 100. More specifically, the deceleration control section 63 may control the automatic emergency deceleration by using the operational effect of the engine brake that is exerted when the engine output is lowered. Alternatively, the deceleration control section 63 may control the automatic emergency deceleration by controlling both of the braking force that is applied to the wheel and the engine output.

Note that the case where the peripheral environment sensor 46 computes the target deceleration has been described above; however, the controller 60 may compute the target deceleration. For example, the detection result of the distance from the motorcycle 100 to the forward obstacle may be output from the peripheral environment sensor 46 to the controller 60, and the controller 60 may compute the target deceleration on the basis of the distance from the motorcycle 100 to the forward obstacle and the body speed.

In step S133, the notification control section 64 prohibits the notification. For example, if the determination result of step S125 after the initiation of the second notification in step S123 is Yes, in step S133, the notification control section 64 terminates the second notification.

Next, in step S134, the deceleration control section 63 prohibits the automatic emergency deceleration operation. Once prohibiting the automatic emergency deceleration operation, the deceleration control section 63 brings the motorcycle 100 into the normal state where the deceleration is generated in the motorcycle 100 in accordance with the driver's operation. More specifically, the deceleration control section 63 brings the motorcycle 100 into a state where the inlet valves 31 are opened, the outlet valves 32 are closed, the first valves 35 are opened, and the second valves 36 are closed, so as to prohibit driving of the pumps 34.

Following step S131 or step S134, in step S135, the acquisition section 61 acquires the trigger information.

Next, in step S137, the trigger determination section 65 determines whether the trigger information has been acquired. If it is determined that the trigger information has been acquired (step S137/Yes), the processing returns to step S135. On the other hand, if it is determined that the trigger information has not been acquired (step S137/No), the processing proceeds to step S139.

In step S139, the notification control section 64 terminates the first notification. Just as described, after the automatic emergency deceleration operation is initiated, the notification control section 64 may continuously make the first notification. Note that the notification control section 64 may terminate the first notification at different timing. For example, the notification control section 64 may terminate the first notification when initiating the second notification. In such a case, step S139 can be executed in parallel with step S123. Alternatively, for example, the notification control section 64 may terminate the first notification when the automatic emergency deceleration operation is initiated. In such a case, step S139 can be executed in parallel with step S129 or step S131. Furthermore, for example, the notification control section 64 may terminate the first notification in the case where it is determined that the driver has the avoidance intention.

Next, in step S141, the execution section 62 terminates the control mode.

Note that the case where the automatic emergency deceleration operation is initiated after the termination of the second notification has been described above; however, in the case where the external force that is applied to the driver in the second notification is not the inertial force that acts on the driver by the deceleration generated in the motorcycle 100, the automatic emergency deceleration operation may be initiated during the second notification. In such a case, the notification control section 64 may continuously make the second notification after the initiation of the automatic emergency deceleration operation, and may terminate the second notification upon the termination of the control mode, for example.

### <Effects of Brake System>

A description will be made on effects of the brake system 10 according to the embodiment of the invention.

In the brake system 10, the control mode that makes the motorcycle 100 execute the automatic emergency deceleration operation is initiated in response to the trigger information that is generated in accordance with the peripheral environment of the motorcycle 100. In the control mode, the first notification and the second notification to notify the driver of the execution of the automatic emergency deceleration operation are sequentially initiated before the automatic emergency deceleration operation is executed. In the first notification, the driver is notified of the execution of the automatic emergency deceleration operation without being applied with the external force. In the second notification, the driver is notified of the execution of the automatic emergency deceleration operation by being applied with the external force. The first notification and the second notification are sequentially executed in a stepwise manner, just as described. In this way, even in the case where the driver does not execute the avoidance operation only by the initiation of the first notification, the initiation of the second notification can promote the driver to execute the avoidance operation. Thus, a collision with the forward obstacle can be avoided while an execution frequency of the automatic emergency deceleration operation is reduced. Therefore, safety can be improved by the automatic emergency deceleration operation while falling of the motorcycle 100 is prevented. In addition, because the first notification executed prior to the second notification adopts the method that does not apply the external force to the driver, it is possible to prevent frequent application of the external force to the driver by the second notification, which gives the driver a sense of discomfort. Thus, the driver can be promoted to execute the avoidance operation prior to the execution of the automatic emergency deceleration operation while being prevented from receiving the sense of discomfort.

Preferably, in the brake system 10, the automatic emergency deceleration operation is initiated after the second notification is terminated. In addition, in the second notification, the external force that is applied to the driver is the inertial force that acts on the driver when the deceleration is generated in the motorcycle 100. Accordingly, prior to the execution of the automatic emergency deceleration operation, the driver can be notified of the execution of the automatic emergency deceleration operation while the motorcycle 100 is decelerated. Therefore, the collision with the forward obstacle can effectively be prevented. In addition, the motorcycle 100 is decelerated before the automatic emergency deceleration operation is executed. Thus, a magnitude of the automatic emergency deceleration that is generated in the motorcycle 100 by the automatic emergency deceleration operation can be reduced. Therefore, falling of the motorcycle 100 can effectively be prevented.

Preferably, in the brake system 10, in the control mode, in the case where it is determined that the driver has the avoidance intention before the initiation of the second notification or during the second notification, the second notification and the automatic emergency deceleration operation are prohibited. In this way, in the case where a possibility of the driver executing the avoidance operation is high, the second notification can be prohibited. Thus, it is possible to prevent the notification from being made against the driver's intention. In addition, in the case where the possibility of the driver executing the avoidance operation is high, the automatic emergency deceleration operation can be prohibited. Thus, it is possible to prevent the automatic emergency deceleration operation from being executed against the driver's intention. Therefore, the execution frequency of the automatic emergency deceleration operation can appropriately be reduced.

Preferably, in the brake system 10, in the control mode, in the case where the change rate of the state amount that is related to the posture of the motorcycle 100 during the turning travel exceeds the change rate reference value, it is determined that the driver has the avoidance intention. In this way, it is possible to appropriately determine presence or absence of the avoidance intention by the driver in accordance with the change rate of the state amount that is related to the posture of the motorcycle 100 during the turning travel.

Preferably, in the brake system 10, in the control mode, in the case where the operation amount that is related to the operation of the motorcycle 100 by the driver exceeds the operation amount reference value, it is determined that the driver has the avoidance intention. In this way, it is possible to appropriately determine the presence or the absence of the avoidance intention by the driver in accordance with the operation amount that is related to the operation of the motorcycle 100 by the driver.

Preferably, in the brake system 10, in the first notification, the driver is notified of the execution of the automatic emergency deceleration operation when the sound is output. In this way, for example, even in the case where the driver has poor visibility, the initiation of the first notification can appropriately promote the driver to execute the avoidance operation.

Preferably, in the brake system 10, in the first notification, the driver is notified of the execution of the automatic emergency deceleration operation when what is displayed is controlled. In this way, for example, even in the case where noise is generated around the driver, the initiation of the first notification can appropriately promote the driver to execute the avoidance operation.

The invention is not limited to each of the embodiments. Modifications are possible within the scope of the invention as defined by the appended claims.

### Reference Sighs List

1: Trunk
2: Handlebar
3: Front wheel
3a: Rotor
4: Rear wheel
4a: Rotor
10: Brake system
11: First brake operation section
12: Front-wheel brake mechanism
13: Second brake operation section
14: Rear-wheel brake mechanism
21: Master cylinder
22: Reservoir
23: Brake caliper
24: Wheel cylinder
25: Primary channel
26: Secondary channel
27: Supply channel
31: Inlet valve
32: Outlet valve
33: Accumulator
34: Pump
35: First valve
36: Second valve
41: Master-cylinder pressure sensor
42: Wheel-cylinder pressure sensor
43: Front-wheel rotational frequency sensor
44: Rear-wheel rotational frequency sensor
45: Lean angle sensor
46: Peripheral environment sensor
47: Steering angle sensor
50: Hydraulic pressure control unit
51: Base body
60: Controller
61: Acquisition section
62: Execution section
63: Deceleration control section
64: Notification control section
65: Trigger determination section
66: Avoidance intention determination section
67: Duration before arrival determination section
71: Display device
72: Sound output device
100: Motorcycle

## Claims

1. A controller (60) controlling behavior of a motorcycle (100), the controller comprising:
an acquisition section (61) that acquires trigger information generated in accordance with peripheral environment of the motorcycle (100); and
an execution section (62) that initiates a control mode in response to the trigger information, the control mode making the motorcycle (100) execute an automatic emergency deceleration operation, **characterized in that**
in the control mode, before the automatic emergency deceleration operation is executed, first notification and second notification to notify a driver of execution of the automatic emergency deceleration operation are sequentially initiated, in the first notification, the driver is notified of the execution of the automatic emergency deceleration operation without being applied with an external force, and in the second notification, the driver is notified of the execution of the automatic emergency deceleration operation by being applied with the external force, wherein
the automatic emergency deceleration operation is initiated after termination of the second notification, and the external force is an inertial force that acts on the driver when deceleration is generated in the motorcycle (100), wherein
in the second notification, the deceleration is generated by controlling a braking force that is applied to a wheel (3, 4) of the motorcycle (100).

2. The controller according to claim 1, wherein
in the second notification, the deceleration is generated by controlling engine output of the motorcycle (100) .

3. The controller according to any one of claims 1 or 2, wherein
in the control mode, in the case where it is determined that the driver has an avoidance intention before initiation of the second notification or during the second notification, the second notification and the automatic emergency deceleration operation are prohibited.

4. The controller according to claim 3, wherein
in the control mode, in the case where a change rate of a state amount that is related to posture of the motorcycle (100) during turning travel exceeds a change rate reference value, it is determined that the driver has the avoidance intention.

5. The controller according to claim 4, wherein
the state amount includes a lean angle of the motorcycle (100) or an angular velocity of the lean angle thereof.

6. The controller according to claim 4 or 5, wherein
the state amount includes a steering angle of the motorcycle (100) or an angular velocity of the steering angle thereof.

7. The controller according to any one of claims 3 to 6, wherein
in the control mode, in the case where an operation amount that is related to an operation of the motorcycle (100) by the driver exceeds an operation amount reference value, it is determined that the driver has the avoidance intention.

8. The controller according to any one of claims 1 to 7, wherein
in the first notification, the driver is notified of the execution of the automatic emergency deceleration operation when sound is output.

9. The controller according to any one of claims 1 to 8, wherein
in the first notification, the driver is notified of the execution of the automatic emergency deceleration operation when what a display is controlled.

10. A control method controlling behavior of a motorcycle (100), the control method comprising:
an acquisition step (S111) of acquiring trigger information that is generated in accordance with peripheral environment of the motorcycle (100); and
an execution step (S115) of initiating a control mode in response to the trigger information, the control mode making the motorcycle (100) execute an automatic emergency deceleration operation, **characterized in that**
in the control mode, before the automatic emergency deceleration operation is executed, first notification and second notification to notify a driver of execution of the automatic emergency deceleration operation are sequentially initiated, in the first notification, the driver is notified of the execution of the automatic emergency deceleration operation without being applied with an external force, and in the second notification, the driver is notified of the execution of the automatic emergency deceleration operation by being applied with the external force, wherein
the automatic emergency deceleration operation is initiated after termination of the second notification, and the external force is an inertial force that acts on the driver when deceleration is generated in the motorcycle (100), wherein
in the second notification, the deceleration is generated by controlling a braking force that is applied to a wheel (3, 4) of the motorcycle (100).

11. A brake system (10) comprising:
a peripheral environment sensor (46) that detects peripheral environment of a motorcycle (100); and
a controller (60) that controls behavior of the motorcycle (100) on the basis of the peripheral environment, according to claim 1.

## Patentansprüche

1. Steuerung (60), die ein Verhalten eines Kraftrads (100) steuert, wobei die Steuerung umfasst:
einen Erfassungsabschnitt (61), der Auslöseinformation erfasst, die gemäß einer peripheren Umgebung des Kraftrads (100) erzeugt wurde; und
einen Ausführungsabschnitt (62), der einen Steuermodus in Reaktion auf die Auslöseinformation initiiert, wobei der Steuermodus das Kraftrad (100) veranlasst, einen automatischen Notverzögerungsvorgang auszuführen, **dadurch gekennzeichnet, dass**
in dem Steuermodus, bevor der automatische Notverzögerungsvorgang ausgeführt wird, eine erste Benachrichtigung und eine zweite Benachrichtigung zum Benachrichtigen eines Fahrers von einer Ausführung des automatischen Notverzögerungsvorgangs nacheinander initiiert werden, wobei in der ersten Benachrichtigung der Fahrer von der Ausführung des automatischen Notverzögerungsvorgangs benachrichtigt wird, ohne dass eine externe Kraft auf ihn aufgebracht wird, und in der zweiten Benachrichtigung der Fahrer von der Ausführung des automatischen Notverzögerungsvorgangs benachrichtigt wird, indem eine externe Kraft auf ihn aufgebracht wird,
wobei
der automatische Notverzögerungsvorgang nach Beendigung der zweiten Benachrichtigung initiiert wird, und die externe Kraft eine Trägheitskraft ist, die auf den Fahrer wirkt, wenn eine Verzögerung in dem Kraftrad (100) erzeugt wird,
wobei
in der zweiten Benachrichtigung die Verzögerung durch Steuern einer Bremskraft erzeugt wird, die auf ein Rad (3, 4) des Kraftrads (100) aufgebracht wird.

2. Steuerung nach Anspruch 1, wobei
in der zweiten Benachrichtigung die Verzögerung durch Steuern einer Motorleistung des Kraftrads (100) erzeugt wird.

3. Steuerung nach einem der Ansprüche 1 oder 2, wobei
in dem Steuermodus, falls vor Initiierung der zweiten Benachrichtigung oder während der zweiten Benachrichtigung bestimmt wird, dass der Fahrer eine Vermeidungsabsicht hat, die zweite Benachrichtigung und der automatische Notverzögerungsvorgang unzulässig sind.

4. Steuerung nach Anspruch 3, wobei
in dem Steuermodus, falls eine Änderungsrate einer Zustandsgröße, die sich auf die Stellung des Kraftrads (100) bezieht, während einer Kurvenfahrt einen Änderungsratenreferenzwert überschreitet, bestimmt wird, dass der Fahrer die Vermeidungsabsicht hat.

5. Steuerung nach Anspruch 4, wobei
die Zustandsgröße einen Schräglagenwinkel des Kraftrads (100) oder eine Winkelgeschwindigkeit des Schräglagenwinkels davon umfasst.

6. Steuerung nach Anspruch 4 oder 5, wobei
die Zustandsgröße einen Lenkwinkel des Kraftrads (100) oder eine Winkelgeschwindigkeit des Lenkwinkels davon umfasst.

7. Steuerung nach einem der Ansprüche 3 bis 6, wobei
in dem Steuermodus, falls eine Betriebsgröße, die sich auf einen Betrieb des Kraftrads (100) durch den Fahrer bezieht, einen Betriebsgrößenreferenzwert überschreitet, bestimmt wird, dass der Fahrer die Vermeidungsabsicht hat.

8. Steuerung nach einem der Ansprüche 1 bis 7, wobei
in der ersten Benachrichtigung der Fahrer von der Ausführung des automatischen Notverzögerungsvorgangs benachrichtigt wird, wenn Ton ausgegeben wird.

9. Steuerung nach einem der Ansprüche 1 bis 8, wobei
in der ersten Benachrichtigung der Fahrer von der Ausführung des automatischen Notverzögerungsvorgangs benachrichtigt wird, wenn eine Anzeige gesteuert wird.

10. Steuerverfahren, das ein Verhalten eines Kraftrads (100) steuert, wobei das Steuerverfahren umfasst:
einen Erfassungsschritt (S111) zum Erfassen einer Auslöseinformation, die gemäß einer peripheren Umgebung des Kraftrads (100) erzeugt wird; und
einen Ausführungsschritt (S115) zum Initiieren eines Steuermodus in Reaktion auf die Auslöseinformation, wobei der Steuermodus das Kraftrad (100) veranlasst, einen automatischen Notverzögerungsvorgang auszuführen, **dadurch gekennzeichnet, dass**
in dem Steuermodus, bevor der automatische Notverzögerungsvorgang ausgeführt wird, eine erste Benachrichtigung und eine zweite Benachrichtigung zum Benachrichtigen eines Fahrers von einer Ausführung des automatischen Notverzögerungsvorgangs nacheinander initiiert werden, wobei in der ersten Benachrichtigung der Fahrer von der Ausführung des automatischen Notverzögerungsvorgangs benachrichtigt wird, ohne dass eine externe Kraft auf ihn aufgebracht wird, und in der zweiten Benachrichtigung der Fahrer von der Ausführung des automatischen Notverzögerungsvorgangs benachrichtigt wird, indem eine externe Kraft auf ihn aufgebracht wird, wobei
der automatische Notverzögerungsvorgang nach Beendigung der zweiten Benachrichtigung initiiert wird, und die externe Kraft eine Trägheitskraft ist, die auf den Fahrer wirkt, wenn eine Verzögerung in dem Kraftrad (100) erzeugt wird, wobei
in der zweiten Benachrichtigung die Verzögerung durch Steuern einer Bremskraft erzeugt wird, die auf ein Rad (3, 4) des Kraftrads (100) aufgebracht wird.

11. Bremssystem (10), umfassend:
einen peripheren Umgebungssensor (46), der eine periphere Umgebung eines Kraftrads (100) detektiert; und
eine Steuerung (60), die ein Verhalten des Kraftrads (100) auf der Basis der peripheren Umgebung steuert, nach Anspruch 1.

## Revendications

1. Dispositif de commande (60) commandant le comportement d'une motocyclette (100), le dispositif de commande comprenant :
une section d'acquisition (61) qui acquiert des informations de déclenchement générées conformément à l'environnement périphérique de la motocyclette (100) ; et
une section d'exécution (62) qui lance un mode de commande en réponse aux informations de déclenchement, le mode de commande amenant la motocyclette (100) à exécuter une opération de décélération d'urgence automatique,
**caractérisé en ce que**
dans le mode de commande, avant l'exécution de l'opération de décélération d'urgence automatique, une première notification et une deuxième notification pour notifier à un pilote de l'exécution de l'opération de décélération d'urgence automatique sont lancées de façon séquentielle, dans la première notification, le pilote est notifié de l'exécution de l'opération de décélération d'urgence automatique sans application d'une force externe, et dans la deuxième notification, le pilote est notifié de l'exécution de l'opération de décélération d'urgence automatique par application de la force externe,
dans lequel
l'opération de décélération d'urgence automatique est lancée après la fin de la deuxième notification, et la force externe est une force d'inertie qui agit sur le pilote lorsqu'une décélération est générée dans la motocyclette (100), dans lequel
dans la deuxième notification, la décélération est générée par commande d'une force de freinage qui est appliquée à une roue (3, 4) de la motocyclette (100).

2. Dispositif de commande selon la revendication 1, dans lequel
dans la deuxième notification, la décélération est générée par commande de la sortie de moteur de la motocyclette (100).

3. Dispositif de commande selon l'une quelconque des revendications 1 ou 2, dans lequel
dans le mode de commande, dans le cas où il est déterminé que le pilote a une intention d'évitement avant le lancement de la deuxième notification ou pendant la deuxième notification, la deuxième notification et l'opération de décélération d'urgence automatique sont empêchées.

4. Dispositif de commande selon la revendication 3, dans lequel dans le mode de commande, dans le cas où un taux de changement d'une quantité d'état qui est liée à la posture de la motocyclette (100) pendant un déplacement en virage dépasse une valeur de référence de taux de changement, il est déterminé que le pilote a l'intention d'évitement.

5. Procédé selon la revendication 4, dans lequel la quantité d'état inclut un angle d'inclinaison de la motocyclette (100) ou une vitesse angulaire de l'angle d'inclinaison de celle-ci.

6. Dispositif de commande selon la revendication 4 ou la revendication 5, dans lequel
la quantité d'état inclut un angle de direction de la motocyclette (100) ou une vitesse angulaire de l'angle de direction de celle-ci.

7. Dispositif de commande selon l'une quelconque des revendications 3 à 6, dans lequel
dans le mode de commande, dans le cas où une quantité d'opération qui est liée à une opération de la motocyclette (100) par le pilote dépasse une valeur de référence de quantité d'opération, il est déterminé que le pilote a l'intention d'évitement.

8. Dispositif de commande selon l'une quelconque des revendications 1 à 7, dans lequel
dans la première notification, le pilote est notifié de l'exécution de l'opération de décélération d'urgence automatique lorsque le son est fourni en sorti.

9. Dispositif de commande selon l'une quelconque des revendications 1 à 8, dans lequel
dans la première notification, le pilote est notifié de l'exécution de l'opération de décélération d'urgence automatique lorsqu'un affichage est commandé.

10. Procédé de commande commandant le comportement d'une motocyclette (100), le procédé de commande comprenant :
une étape d'acquisition (S111) consistant à acquérir des informations de déclenchement qui sont générées conformément à l'environnement périphérique de la motocyclette (100) ; et
une étape d'exécution (S115) consistant à lancer un mode de commande en réponse aux informations de déclenchement, le mode de commande amenant la motocyclette (100) à exécuter une opération de décélération d'urgence automatique,
**caractérisé en ce que**
dans le mode de commande, avant l'exécution de l'opération de décélération d'urgence automatique, une première notification et une deuxième notification pour notifier à un pilote de l'exécution de l'opération de décélération d'urgence automatique sont lancées de façon séquentielle, dans la première notification, le pilote est notifié de l'exécution de l'opération de décélération d'urgence automatique sans application d'une force externe, et dans la deuxième notification, le pilote est notifié de l'exécution de l'opération de décélération d'urgence automatique avec application de la force externe, dans lequel
l'opération de décélération d'urgence automatique est lancée après la fin de la deuxième notification, et la force externe est une force d'inertie qui agit sur le pilote lorsqu'une décélération est générée dans la motocyclette (100), dans lequel
dans la deuxième notification, la décélération est générée par commande d'une force de freinage qui est appliquée à une roue (3, 4) de la motocyclette (100).

11. Système de freinage (10) comprenant :
un capteur d'environnement périphérique (46) qui détecte l'environnement périphérique d'une motocyclette (100) ; et
un dispositif de commande (60) qui commande le comportement de la motocyclette (100) sur la base de l'environnement périphérique, selon la revendication 1.
